# DEMANDE DE BREVET EUROPEEN

(11) **EP 2 712 783 A1**
(43) Date de publication de la demande: **02.04.2014**
(21) Numéro de dépôt: 13186095.9
(22) Date de dépôt: 26.09.2013
(51) Int. Cl.: B61C 17/12, G05G 5/03, G05G 1/04

(54) **Levier amélioré à actionnement manuel de commande en traction/freinage pour la conduite d'un véhicule ferroviaire**

(30) Priorité: 27.09.2012 FR 1259111
(71) Demandeur: ALSTOM Transport SA, 92300 Levallois-Perret (FR)
(72) Inventeur: Biscari, Didier, 92600 ASNIERES SUR SEINE (FR); Miglianico, Denis, 75009 PARIS (FR); Audousset, Xavier, 50100 CHERBOURG-OCTEVILLE (FR)
(74) Mandataire: Blot, Philippe Robert Emile

(57) **Abrégé**

Ce levier (10) comporte :
- un bâti (12) ;
- une poignée (14) pivotant par rapport au bâti (12) ;
- un encodeur (22, 24, 26) émettant un signal de détection (SD1, SD2, SD3) correspondant à la position angulaire instantanée de la poignée (14) par rapport à une direction de référence (D) ;
- une chaîne de rétroaction (60) comportant :
- un microprocesseur (62) propre à exécuter les instructions d'un algorithme de rétroaction (64) afin de générer, à partir du signal de détection (SD1, SD2, SD3), un signal de rétroaction (SR) ; et,
- un servomoteur (68), couplé à la poignée (14) et propre à générer un couple sur la poignée (14) en fonction du signal de rétroaction reçu.

## Description

L'invention a pour domaine celui des leviers à actionnement manuel de commande en traction/freinage pour la conduite d'un véhicule ferroviaire.

Dans le présent document, un véhicule ferroviaire est un véhicule susceptible de circuler sur une voie ferrée. Il s'agit par exemple d'un tramway, d'un métro, d'un train régional, d'un train à grande vitesse, etc.

Un tel véhicule ferroviaire comporte une ou plusieurs voitures La cabine, dans laquelle prend place le conducteur du véhicule, est située généralement en tête du train.

Parmi les différents équipements de la cabine, il est connu un levier à actionnement manuel de commande de la vitesse imposée. Il est également connu d'utiliser un levier à actionnement manuel de commande en traction/freinage des moyens d'entraînement du véhicule.

Un tel levier comporte une poignée qui est déplacée par le conducteur soit vers l'avant, soit vers l'arrière.

La course de la poignée est généralement divisée en secteurs angulaires. Dans le secteur situé entre 0 et +34°, le déplacement de la poignée permet la commande des moteurs fonctionnant en traction du véhicule et la génération d'un effort de traction proportionnelle à la position angulaire de la poignée, le maximum de l'effort de traction étant commandé lorsque la poignée est dans la position +34°.

Dans le secteur situé entre 0 et -20°, le déplacement de la poignée permet la commande des moyens de freinage électriques du véhicule, pour un effort de freinage léger du véhicule.

Dans le secteur situé entre -20 à - 44°, le déplacement de la poignée permet la commande d'un freinage « conjugué » (utilisation à la fois des moyens de freinage électriques et de moyens de freinage mécaniques) pour respecter la consigne de freinage demandée.

Enfin, dans le secteur situé entre -44 à -54°, le déplacement de la poignée permet la commande des moyens de freinage d'urgence, essentiellement mécaniques, pour un effort de freinage très important du véhicule, afin de l'arrêter sur la distance la plus courte possible.

Dans certains pays, en Grande Bretagne par exemple, la logique est inversée : le secteur de freinage se situe entre 0 et +54° et le secteur en traction de 0° à -34°

Dans les leviers connus, la génération des signaux de commande s'effectue par l'intermédiaire d'interrupteurs. Lorsque la poignée se situe dans l'un des secteurs mentionnés ci-dessus, l'interrupteur correspondant est basculé d'un état ouvert (état logique 0) à un état fermé (état logique 1), générant ainsi un signal de commande à destination des unités d'actionnement des moyens de traction et des moyens de freinage équipant le véhicule.

De plus, le passage d'un secteur à l'autre est marqué par la présence d'une butée qui nécessite, afin de la franchir, l'application d'une force supplémentaire de la part du conducteur. Ces butées sont formées par une modification de la pente d'une surface de came le long de laquelle frotte une came portée par la poignée du levier.

Enfin, dans certaines applications, un moyen formant ressort permet de ramener la poignée dans la position neutre (0°) lorsque le conducteur n'exerce aucune force sur la poignée. C'est le cas par exemple pour un levier équipant un véhicule du type tramway.

Les leviers connus sont ainsi des dispositifs essentiellement mécaniques ou électromécaniques.

Les pièces dont ils sont constitués sont soumises à l'usure et, par conséquent, sont susceptibles de nombreuses pannes. Puisque le levier de commande en traction/freinage est un dispositif qui participe au déplacement en sécurité du véhicule, il doit faire l'objet d'une maintenance préventive pour garantir son bon fonctionnement. Cette maintenance représente un coût d'exploitation important.

L'invention a donc pour but de palier aux problèmes précités, en proposant un levier amélioré, présentant notamment une fiabilité accrue.

Pour cela l'invention a pour objet un levier à actionnement manuel de commande en traction/freinage pour la conduite d'un véhicule ferroviaire, **caractérisé en ce qu'il** comporte : un bâti destiné à être solidarisé à un tableau de bord du véhicule ; une poignée apte à pivoter par rapport au bâti autour d'un axe de pivotement ; un encodeur propre à émettre un signal de détection correspondant à la position angulaire instantanée de la poignée autour de l'axe de pivotement, par rapport à une direction de référence ; une chaîne de rétroaction comportant :
- un microprocesseur propre à exécuter les instructions d'un algorithme de rétroaction afin de générer, à partir du signal de détection émis en sortie de l'encodeur, un signal de rétroaction ; et,
- un ensemble servomoteur, couplé à la poignée et propre à générer un couple sur la poignée en fonction du signal de rétroaction reçu depuis le microprocesseur.

Suivant des modes particuliers de réalisation, le levier comporte une ou plusieurs des caractéristiques suivantes, prise(s) isolément ou suivant toutes les combinaisons techniques possibles :
- l'ensemble servomoteur comporte un actionneur et un servomoteur, l'actionneur étant propre à déterminer, en fonction du signal de rétroaction émis par le microprocesseur, un couple requis que doit générer le servomoteur, et à réguler en conséquence le servomoteur.
- l'ensemble servomoteur comporte une source de puissance électrique dédiée.
- l'algorithme de rétroaction est propre à générer un signal de rétroaction destiné à commander l'application d'un couple qui est un contre effort sur la poignée et dont une amplitude est fonction de la position instantanée de la poignée, délivrée par l'encodeur.
- l'algorithme de rétroaction est propre à vérifier le respect d'une contrainte, de préférence du type « conduite écologique », en fonction de paramètres de fonctionnement du véhicule, et, à défaut, à émettre un signal de rétroaction propre à commander l'application d'un couple adapté sur la poignée, de préférence du type vibratoire.
- le levier comporte une chaîne de détermination, en sécurité, d'un état logique.
- le levier comporte au moins un premier encodeur associé à un premier circuit logique propre à émettre un premier signal brut d'état logique et un second encodeur associé à un second circuit logique propre à émettre un second signal brut d'état logique et une unité de vote permettant l'émission, d'un signal d'état logique en sécurité à partir des premier et second signaux bruts d'état logique.
- le levier comporte une chaîne de traitement pour la génération d'un signal de consigne d'effort.

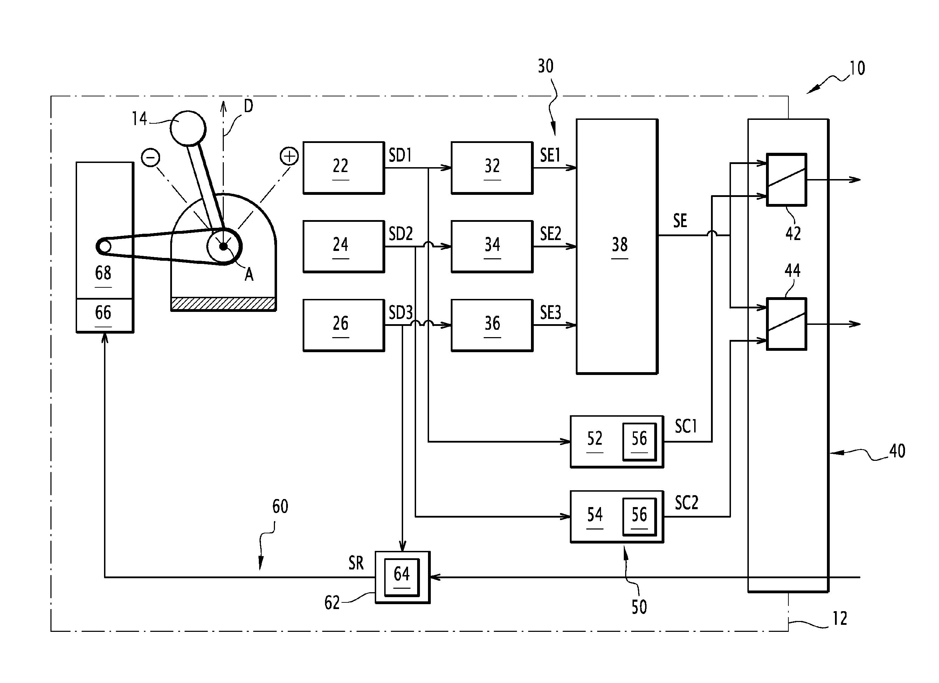

L'invention et ses avantages seront mieux compris à la lecture de la description qui va suivre, donnée uniquement à titre d'exemple et faite en se référant au dessin annexé sur lequel la figure représente schématiquement un levier de commande en traction/freinage selon l'invention.

En se référant à la figure, le levier de commande en traction/freinage 10 comporte un bâti 12 qui est destiné à être solidaire d'un tableau de bord situé dans la cabine du véhicule ferroviaire considéré.

Le levier 10 comporte une poignée 14 préhensible, qui est montée pivotante sur le bâti. La poignée 14 pivote autour d'un axe de pivotement A sur un intervalle angulaire s'étendant entre un angle maximal, valant par exemple + 110°, et un angle minimal, valant par exemple -110°, autour d'une direction de référence D.

Le levier 10 comporte des moyens de mesure de la position angulaire instantanée de la poignée 14. Ces moyens sont constitués par des premier, second et troisième encodeurs, 22, 24 et 26. Chaque encodeur est solidaire de la poignée et est propre à délivrer un signal de détection SDi correspondant à la position angulaire instantanée de la poignée 14 par rapport à la direction de référence D.

Ces encodeurs 22, 24, 26, peuvent être du type optique. Cependant, ils comportent alors une DEL, acronyme de Diode ElectroLuminescente (LED en anglais). Or, une telle source lumineuse est susceptible de vieillissement et de défaillance. Cela impose une maintenance régulière et le remplacement préventif des DELs.

Dans une variante actuellement préférée, les encodeurs 22, 24, 26 sont du type électromagnétique à effet Hall.

Dans une autre variante, le type des encodeurs utilisés est un panachage entre les types optique et électromagnétique.

Chaque encodeur génère un signal de détection SDi qui est un signal numérique. De préférence, ce signal est un signal de Gray, codé par exemple sur 8 bits, ou 11 bits si l'on veut plus de précision.

En aval des trois encodeurs, le levier 10 comporte une première chaîne de traitement pour la génération d'un état logique du levier. Cette chaîne est référencée de manière générale par le chiffre 30.

La première chaîne 30 comporte des premier, second et troisième circuits logiques, 32, 34 et 36, qui sont programmables. De tels circuits logiques sont dénommés FPGA, de l'anglais « Field Programmable Gate Array ».

Chaque circuit logique reçoit, en entrée, le signal de détection SDi généré par l'un des encodeurs. Il compare ce signal de détection à un ensemble de signaux de référence SRef. Ces signaux de référence correspondent à des positions angulaires de référence de la poignée 14.

Ces positions angulaires de référence sont définies lors de la configuration du levier 10. Les circuits logiques 32 à 36 sont configurés en conséquence.

Ces positions angulaires de référence définissent des secteurs angulaires à l'intérieur de l'intervalle angulaire que peut parcourir la poignée 14.

Par exemple, ces secteurs angulaires sont, comme dans l'art antérieur, un secteur en traction entre 0 et +34° et trois secteurs en freinage respectivement entre 0 et -20° pour un freinage léger, -20 et -44° pour un freinage important, et -40 et -54° pour un freinage d'urgence.

Le signal émis en sortie d'un circuit logique est un signal brut d'état logique, SEi, indiquant l'état logique du levier 10, c'est-à-dire, le secteur dans lequel se situe la poignée 14.

La première chaîne 30 comporte, en aval des circuits logiques 32, 34 et 36, une unité de vote « 2 parmi 3 » 38 qui prend en entrée les trois signaux bruts d'état logique SE1, SE2 et SE3 et délivre, en sortie, un signal d'état logique en sécurité SE. Le signal d'état logique en sécurité SE prend la valeur des au moins deux signaux bruts SEi et SEj qui sont identiques.

Le signal d'état en sécurité est transmis, via des premier et second canaux 42 et 44 d'une interface d'entrée/sortie 40 dont est équipé le levier 10, le long de première et seconde lignes connectant le levier 10 à différentes unités d'actionnement (non représentées) des moyens de traction et des moyens de freinage de chaque voiture du véhicule ferroviaire.

Parallèlement, le levier 10 comporte une seconde chaîne de traitement pour la génération d'un signal de consigne d'effort. Cette seconde chaîne est référencée de manière générale par le chiffre 50.

La seconde chaîne 50 comporte des premier et second microprocesseurs 52 et 54 qui sont respectivement programmés pour exécuter les instructions d'un algorithme de traitement 56.

Le premier microprocesseur 52 traite le signal de détection SD1 généré en sortie du premier encodeur 22 pour générer un premier signal de consigne d'effort SC1. Le premier signal de consigne d'effort SC1 est ensuite transmis, via l'interface 40, le long de la première ligne du véhicule ferroviaire vers les différentes unités d'actionnement des moyens de traction et des moyens de freinage de chaque voiture du véhicule ferroviaire.

De manière similaire, le second microprocesseur 54 traite le signal de détection SD2 généré en sortie du second encodeur 24 pour générer un second signal de consigne d'effort SC2. Celui-ci est transmis, via l'interface 40, le long de la seconde ligne du véhicule ferroviaire vers les unités d'actionnement.

Une unité d'actionnement prend en compte les premier et second signaux de consigne d'effort SC1 et SC2 si ils sont cohérents entre eux et avec le signal d'état logique en sécurité SE. Dans l'affirmative, chaque unité d'actionnement détermine le point de fonctionnement en traction ou en freinage correspondant au premier et second signaux de consigne d'effort et régule les moyens de traction et ceux de freinage de manière adaptée.

Le levier 10 comporte une chaîne de rétroaction 60.

La chaîne de rétroaction 60 comporte un troisième microprocesseur 62.

Dans le mode de réalisation illustré sur la figure, le troisième microprocesseur 62 est propre à exécuter les instructions d'un algorithme de rétroaction 64 conçu pour générer un signal de rétroaction SR à partir du signal de détection SD3 émis en sortie du troisième encodeur 26.

La chaîne de rétroaction 60 du levier 10 comporte un ensemble constitué d'un actionneur 66 pilotant un servomoteur 68.

Le servomoteur 68 est couplé mécaniquement à la poignée 14 du levier.

Le servomoteur 68 est propre à appliquer sur la poignée un couple.

L'actionneur 66 détermine le couple requis en fonction du signal de rétroaction SR reçu depuis le troisième microprocesseur 62. L'actionneur 66 asservit ensuite le servomoteur 68 afin que le couple qu'il applique à la poignée corresponde au couple requis.

Le servomoteur 68 est par exemple capable de générer un couple prenant la forme d'un contre effort sur la poignée 14, d'environ 50 N au maximum.

Le servomoteur 68 est avantageusement alimenté par une source de puissance électrique (non représentée) qui lui est propre, telle que par exemple une source comportant des transistors MOSFET, de l'anglais « Metal Oxide Semiconductor Field Effect Transistor ».

L'algorithme de rétroaction 64 exécuté par le troisième microprocesseur 62 est configurable lors de l'implantation du levier 10 dans un véhicule ferroviaire d'un type particulier, de manière à définir le profil du contre effort à appliquer sur la poignée en fonction de la position angulaire instantanée de celle-ci.

Par exemple, pour imiter le comportement du levier de commande de l'art antérieur, l'algorithme de rétroaction est configuré afin d'émettre un signal de rétroaction conduisant à l'application d'un contre effort important lorsque la poignée est dans une position angulaire 0°, -20° ou -40° afin d'imiter la présence de crans entre deux secteurs successifs ; à l'application d'un contre effort progressif proportionnel à la position angulaire de la poignée dans le secteur entre 0 et +34° correspondant à un actionnement en traction du véhicule ; et à l'application d'un contre effort très important en tout point des segments entre +34 et +110°, d'une part, et entre +54 et -110° d'autre part, afin d'interdire l'excursion de la poignée dans ces domaines angulaires d'extrémité, dans le but de limiter la plage angulaire totale de déplacement de la poignée.

Il est à noter que les circuits logiques 32 à 34 et l'algorithme de rétroaction 64 sont configurés de manière cohérente entre eux.

Ainsi, le levier 10 peut être produit de manière standard, puis configuré d'une façon particulière en fonction du type de véhicule dans lequel il est implanté. Le levier selon l'invention est ainsi qualifié d'universel.

Avantageusement, le servomoteur 68 est également capable de générer un couple propre à donner à la poignée un mouvement vibratoire.

La chaîne de rétroaction 60 est alors utilisée afin de donner au conducteur une information sous la forme d'un stimulus tactile.

Ainsi, dans l'exemple suivant, l'information communiquée au conducteur est une information relative à l'efficacité écologique de la conduite du véhicule ferroviaire.

Pour ce faire, l'algorithme de rétroaction 62 détermine, à partir de données qui lui sont communiquées via l'interface 40, telles qu'un profil de la mission assignée au véhicule ferroviaire et une donnée de position instantanée du véhicule permettant de situer ce dernier le long du profil de la mission, une consigne d'effort optimale pour l'actionnement des moyens de traction et/ou des moyens de freinage du véhicule.

Cette consigne d'effort est optimale au sens où elle satisfait un critère qui, dans le présent exemple, consiste à minimiser la consommation énergétique du véhicule ferroviaire.

En fonction de cette consigne optimale, l'algorithme de rétraction 64 calcule la position angulaire optimale de la poignée 14.

Enfin, l'algorithme de rétroaction 64 compare la position instantanée de la poignée, délivrée par le troisième encodeur 26, avec la position angulaire optimale.

Si la distance angulaire entre ces deux positions est supérieure à une valeur prédéfinie, l'algorithme de rétroaction 64 génère un signal de rétroaction SR adapté pour commander l'application d'un couple propre à faire vibrer la poignée 14 ou à initier un déplacement minime dans le sens de la réduction du niveau de l'effort appliqué par le conducteur sur la poignée.

Lorsque le conducteur ressent cette vibration, il est informé que la position qu'il a donnée à la poignée 14 n'est pas la plus adaptée et qu'il doit la modifier pour adopter un régime de fonctionnement en traction ou en freinage permettant de respecter le critère, ici de conduite écologique.

Dans le cas où la distance angulaire entre ces deux positions est inférieure à une valeur prédéfinie, l'algorithme de rétroaction 64 génère un signal de rétroaction créant un « cran » qui sera perçu par le conducteur lorsqu'il essayera de dépasser la valeur recommandée. Avantageusement, ce « cran » est glissant et suit une courbe optimale de traction/freinage.

Ainsi, le levier 10 donne au conducteur, sous une forme tactile, une information qui, selon l'art antérieur, aurait nécessité la lecture d'un ou plusieurs écrans. En utilisant le présent levier, le conducteur peut se concentrer sur l'observation de l'environnement dans lequel évolue le véhicule. La sécurité de circulation est améliorée. Un tel levier est particulièrement avantageux dans le cas de la conduite d'un tramway au milieu d'une circulation urbaine dense.

En variante, dans une version simple de l'algorithme de rétroaction et pour un véhicule ferroviaire utilisé pour réaliser des missions identiques au cours du temps, le profil utilisé par l'algorithme de rétroaction 64 indique simplement la position angulaire de la poignée en fonction de la position instantanée du véhicule ferroviaire le long du parcours à effectuer.

En variante, la poignée du levier selon l'invention comporte un bouton, dit « de contrôle d'homme mort », qui, s'il est relâché par le conducteur au-delà d'une durée prédéterminée, produit un signal d'alarme conduisant, par exemple, à la mise en oeuvre d'un freinage d'urgence.

Le levier selon l'invention permet de s'affranchir de nombreuses pièces mécaniques. De ce fait, il présente une durée de vie accrue par rapport au levier de l'art antérieur, ainsi qu'une meilleure fiabilité. Il présente une maintenance facilitée et, par conséquent, un coût d'utilisation plus faible.

Par ailleurs, les composants électriques et électroniques du présent levier permettent de réduire le volume de celui-ci, par rapport à celui du levier de l'art antérieur.

En variante, afin de réduire le nombre de microprocesseur, l'algorithme de rétroaction est exécuté par l'un ou l'autre des premier et second microprocesseurs 52, 54.

De manière similaire, la première chaîne de traitement en sécurité 30 peut avoir une autre structure que celle présentée ci-dessus, qui comporte une triple redondance, pour garantir la génération d'un signal d'état logique, respectant le niveau SIL 4, de l'anglais « Safety Integrity Level 4 » ou niveau 4 d'intégrité de la sécurité.

## Revendications

1. Levier (10) à actionnement manuel de commande en traction/freinage pour la conduite d'un véhicule ferroviaire, **caractérisé en ce qu'il** comporte :
- un bâti (12) destiné à être solidarisé à un tableau de bord du véhicule ;
- une poignée (14) apte à pivoter par rapport au bâti (12) autour d'un axe de pivotement (A) ;
- un encodeur (22, 24, 26) propre à émettre un signal de détection (SD1, SD2, SD3) correspondant à la position angulaire instantanée de la poignée (14) autour de l'axe de pivotement (A), par rapport à une direction de référence (D) ;
- une chaîne de rétroaction (60) comportant :
- un microprocesseur (62) propre à exécuter les instructions d'un algorithme de rétroaction (64) afin de générer, à partir du signal de détection (SD1, SD2, SD3) émis en sortie de l'encodeur (22, 24, 26), un signal de rétroaction (SR) ; et,
- un ensemble servomoteur (66, 68), couplé à la poignée (14) et propre à générer un couple sur la poignée (14) en fonction du signal de rétroaction reçu depuis le microprocesseur (62).

2. Levier selon la revendication 1, dans lequel l'ensemble servomoteur (66, 68) comporte un actionneur (66) et un servomoteur (68), ledit actionneur (66) étant propre à déterminer, en fonction du signal de rétroaction (SR) émis par le microprocesseur (62), un couple requis que doit générer ledit servomoteur (68), et à réguler en conséquence ledit servomoteur (68).

3. Levier selon la revendication 2, dans lequel l'ensemble servomoteur (66, 68) comporte une source de puissance électrique dédiée.

4. Levier selon l'une quelconque des revendications précédentes, dans lequel l'algorithme de rétroaction (64) est propre à générer un signal de rétroaction (SR) destiné à commander l'application d'un couple qui est un contre effort sur la poignée (14), dont une amplitude est fonction de la position instantanée de la poignée, délivrée par l'encodeur (22, 24, 26).

5. Levier selon l'une quelconque des revendications précédentes, dans lequel ledit algorithme de rétroaction (64) est propre à vérifier le respect d'une contrainte, de préférence du type « conduite écologique », en fonction de paramètres de fonctionnement du véhicule, et, à défaut, à émettre un signal de rétroaction (SR) propre à commander l'application d'un couple adapté sur la poignée (14), de préférence du type vibratoire.

6. Levier selon l'une quelconque des revendications précédentes, comportant une chaîne (30) de détermination, en sécurité, d'un état logique (SE).

7. Levier selon la revendication 6, comportant au moins un premier encodeur (22) associé à un premier circuit logique (32) propre à émettre un premier signal brut d'état logique (SE1) et un second encodeur (24) associé à un second circuit logique (34) propre à émettre un second signal brut d'état logique (SE2) et une unité de vote (38) permettant l'émission, d'un signal d'état logique en sécurité (SE) à partir des premier et second signaux bruts d'état logique.

8. Levier selon l'une quelconque des revendications précédentes, comportant une chaîne de traitement (50) pour la génération d'un signal de consigne d'effort (SC1, SC2).
